# EUROPEAN PATENT SPECIFICATION

(11) **EP 1 866 382 B1**
(45) Date of publication and mention of the grant of the patent: **02.09.2009**
(21) Application number: 06727425.8
(22) Date of filing: 20.03.2006
(51) Int. Cl.: C09C 1/36, C09C 1/12, C09C 1/24, C09C 1/40, C09C 3/06, C04B 35/00

(54) **PROCESS FOR THE INCLUSION OF HEAT-LABILE CERAMIC PIGMENTS AND THE INCLUSION PIGMENTS THUS OBTAINED**
VERFAHREN ZUM EINSCHLIESSEN HITZELABILER KERAMISCHER PIGMENTE UND DIE SO ERHALTENEN EINSCHLUSSPIGMENTE
PROCEDE D'INCLUSION DE PIGMENTS CERAMIQUES THERMOLABILES ET PIGMENTS D'INCLUSION AINSI OBTENUS

(30) Priority: 22.03.2005 IT FI20050047
(43) Date of publication of application: 19.12.2007
(73) Proprietor: Colorobbia Italia S.p.a., 50053 Sovigliana Vinci (Firenze) (IT)
(72) Inventor: ALBONETTI, Stefania, I-40026 Imola (IT); BALDI, Giovanni, I-50025 Montespertoli (IT); BITOSSI, Marco, I-50056 Montelupo Fiorentino (IT); COSTA, Anna, Luisa, I-48022 Lugo (IT); DONDI, Michele, I-40137 Bologna (IT); MATTEUCCI, Francesco, I-48100 Ravenna (IT); ZAMA, Isabella, I-48018 Faenza (IT)
(74) Representative: Gerli, Paolo
(86) International application number: PCT/IB2006/000786
(87) International publication number: WO 2006/100596

(56) References cited:
- WO-A-03/076525
- US-A- 5 753 026
- A. GARCIA, M. LLUSAR, S. SORLI, J. CALBO, M.A. TENA, G. MONROS: "Effect of the surfactant and the precipitant on the synthesys of pink coral by microemulsion method[ü" JOURNAL OF THE EUROPEAN CHEMICAL SOCIETY, vol. 23, 2003, pages 1829-1838, XP002402053
- BONDIOLI F ET AL: "Syntheses of Fe2O3/Silica Red Inorganic Inclusion Pigments for Ceramic Applications" May 1998 (1998-05), MATERIALS RESEARCH BULLETIN, ELSEVIER, KIDLINGTON, GB, PAGE(S) 723-729 , XP004145412 ISSN: 0025-5408 the whole document

## Description

### FIELD OF THE INVENTION

The invention relates to the field of processes for preparing ceramic pigments.

### STATE OF THE ART

Ceramic pigments are inorganic crystalline solids used for colouring ceramic products by their dispersion in both the ceramic mix and the coating (glaze or enamel). The pigment imparts colour to the ceramic article through its mechanical dispersion within the medium to be coloured, i.e. creating a heterogeneous mixture with the vitreous crystalline matrix of the finished product, without its dissolving in the liquid phase formed during firing.

The requirements that a crystalline phase must satisfy so that it can be used as a ceramic pigment, are the following:
- high colouring strength: it must present a high intensity of colour even at low concentrations and have high refractive indices to light;
- chemical stability: it must maintain its crystalline chemical characteristics during firing of the ceramic body, i.e. it must not react with the other components, by melting and/or forming a new phase;
- thermal or refractory stability: it must be stable in ceramic mixes at firing temperatures up to ∼ 1300°C, maintaining unaltered its optical properties; since ceramic firing takes place with the pigment crystals dispersed in a mostly liquid silica matrix, and consequently more or less markedly aggressive, thermal stability of the crystalline structures is clearly lower than the theoretical: therefore, the melting point of the pigments must be substantially higher than the ceramic firing temperature.
- low toxicity: it must not contain toxic elements, so as to satisfy safety and health requirements for both the operators and environment;
- low cost of raw materials: the starting oxides, which react in the solid state to generate the final structure, must not be raw materials that are hard to find or very costly.

Crystalline structures exist that, while presenting a very intense colour, do not satisfy the requirements of physico-chemical stability, such as ferric oxide or cadmium selenide and cadmium-sulfoselenide. The commercial use of such pigments is therefore limited to ceramic applications that require a low firing temperature and matrices which are chemically little aggressive. The possible solution for overcoming these limitations is to protect the heat-labile pigment by its inclusion in a transparent refractory material, capable on the one hand of protecting it from chemical interactions with the ceramic matrix and on the other hand of maintaining as unaltered as possible the colour characteristics of the pigment itself.

Currently, the most efficient coating strategies, or the inclusion of ceramic powders in a matrix, involve wet techniques such as chemical co-precipitation, sol-gel process, heterocoagulation and preparation by using particles of nanometric size (see WO 03/076525 in the name of the same Applicant) in which the powders are processed in an aqueous medium and subsequently dried.

A. Garcia et al. in Journal of the European Chemical Society, vol. 23, 2003, pp. 1829 - 1838 D1 describe pigments included in an inert matrix through a process of micro-emulsion while US-A-5 753 026 describes a process for preparing inclusion pigments by suspending the pigment to be encapsulated in an aqueous solution of an inclusion material precursor and spraying it in a reactor heated at 850° - 1100°C.

Bondioli F. et al. in "Syntheses of Fe2O3/Silica Red Inorganic Inclusion pigments for Ceramic Applications" May 1998 (1998-05), Materials Research Bulletin, Elsevier, Kindlington, GB, pp. 723-729 describe the syntheses of red inorganic ceramic pigments by inclusion of hematite in a fumed silica matrix.

In the light of the aforegoing, the importance of providing a process enabling heat-labile ceramic inclusion pigments to be obtained is therefore evident.

### DETAILED DESCRIPTION OF THE INVENTION

The present invention enables the aforesaid problems to be overcome by virtue of a process for preparing heat-labile ceramic inclusion pigments comprising a heterocoagulation step and a rapid drying step.

The combination of these two steps proves to be fundamental for efficiently obtaining pigment particles protected by a refractory shell.

In this respect the heterocoagulation, which consists of the adhesion of powders stably dispersed with opposing surface charges through a mechanism of electrostatic attraction, proves to be economically advantageous relative to actual chemical techniques (chemical co-precipitation, sol-gel process) which comprise the use of costly salts as ceramic oxide precursors, while on the other hand a rapid drying technique is fundamental for preserving the adhesion between powders and for obtaining particles with ideal morphological and compositional characteristics.

In accordance with the present invention the process therefore comprises:
- preparing a stable aqueous suspension, in which the heat-labile pigment of suitable particle size distribution is dispersed;
- preparing a stable aqueous suspension, in which the inert matrix or its precursors is dispersed;
- mixing the two suspensions;
- spray drying or atomizing the mixture.

During the course of the mixing/grinding of the aqueous suspensions of heat-labile pigment and inert matrix respectively, the stable and uniform adhesion of the inert matrix particles to the heat-labile pigment must be facilitated, for which the surfaces of the particles of the two phases must have an opposing charge which must be sufficiently high to prevent their separate coagulation. For this reason the addition to one or both suspensions of an anionic or cationic dispersant may be necessary, so as to provide them with opposing charge functions, favouring the electrostatic attraction between the particles. For this purpose, the commercially available anionic dispersant Duramax and the commercially available cationic dispersant Amberlite have proven to be particularly effective.

In order to ensure the efficiency of the inclusion process by means of atomization, the average size of the heat-labile pigment and inert matrix must be suitable for obtaining a stable suspension, being generally less than 10 µm. Preferably the quantity of water used for every suspension is such that the total solid content is 30 or 40 wt %; and the weight ratio between the inert matrix and heat-labile pigment is between 5:1 and 20:1.

Once the two suspensions are prepared, they are mixed, and the pH of the mixture is suitably adjusted by adding HCl or NaOH so that the formation of functions with opposing charges on the particles is optimised; where colloidal silica is used, said pH is found to be within the range 3 to 5.

Preferably the preparation of the suspensions and their subsequent mixing is achieved by rolling a container containing zirconia or alumina grinding bodies (ball milling) over rollers (normally for 12-16 hours).

The mixture obtained is then subjected to a rapid drying process, such as lyophilisation or atomization (drying as a spray produced by an atomizer nozzle), which allows the desired inclusion pigments to be obtained in powder form.

The conditions applied in an atomization process according to the invention are given in table 1, by way of example.

**Table 1 -Atomizer operative conditions**

| Operative variable | Range under consideration | Fixed value |
|---|---|---|
| Feed flow rate (ml/h) | / | 210 |
| Drying fluid rate (m³/h) | / | 65 |
| Fluid pressure (bar) | 1-3 | 1.8 |
| Temperature (°C) | 250-200 | 200 |
| Nozzle diameter (mm) | 0.5; 1.5 | 1.5 |

Once dried, the powders obtained can be applied en masse to the mixes or mixed into the glazes. Should it be necessary to improve adhesion of the coating to the pigment, the atomized powders can be calcinated at high temperature (between 400 and 1400°C).

In the present invention, the term "heat-labile pigments" means those compounds that decompose under the action of heat in an oxidizing environment or in the presence of melted substances, as in the case of applications in enamels, glazes or ceramic mixes.

The following materials can be particularly indicated: cadmium sulfoselenide, hematite Fe₂O₃, tungsten bronzes M^{l}ₙWO₃ where M^{l} is an alkaline metal and 0.1<n<0.95, or MoOₓ(OH)_{y}, where x=2, and y=1; or x=2.5, and y=0.5.

As transparent and refractory coatings, able to protect the heat-labile pigment, the following can for example be indicated: ZrO₂, SiO₂, SnO₂, ZrSiO₄, Al₂O₃, TiO₂, CeO₂, and glass ceramic materials such as CZS (CaO-ZrO₂-SiO₂), BAS (BaO-Al₂O₃-SiO₂), MAS (MgO-Al₂O₃-SiO₂), CAS (CaO-Al₂O₃-SiO₂), NAS (Na₂O-Al₂O₃-SiO₂), ZnAS (ZnO-Al₂O₃-SiO₂).

In the present patent, the term "inclusion pigment" means a compound material consisting of a heat-labile pigment (as previously defined) covered by a transparent refractory coating (as aforedefined). In particular, in the case of the present patent, the following compounds are intended as inclusion pigments: ZrSiO₄:Fe₂O₃, ZrSiO₄:Cd(S,Se), ZrO₂:Cd(S,Se), SiO₂:Cd(S,Se), Al₂O₃:Cd(S,Se), Al₂O₃:Fe₂O₃, SnO₂:Fe₂O₃, SnO₂:Cd(S,Se), SiO₂:MoOₓ(OH)_{y}, Al₂O₃:MoOₓ(OH)_{y}, SnO₂:MoOₓ(OH)_{y}, ZrO₂:MoOₓ(OH)_{y}, ZrSiO₄:MoOₓ(OH)_{y}, (where x=2, and y=1; or x=2.5, and y=0.5), SiO₂:MₙWO3, SnO₂:MₙWO₃, ZrO2:MₙWO₃, ZrSiO₄:MₙWO₃ (where 0.1<n<0.95, and M is chosen from Na, K, Li, Ca, Sr, Ba, Cu, Zn, Cd, In, Sn, La).

Some examples of preparing inclusion pigments by the method described in the present invention are given hereinafter.

The measurements of ξ potential, which enable the electrostatic repulsion of particles suspended in aqueous medium to be calculated, were undertaken by using an electroacoustic characterization technique by means of the Acoustosizer II (Colloidal Dynamics).

The pH, ξ potential and isoelectric point values are given in table 2 for some of the materials studied. In the system under examination, the hematite represents the heat-labile pigment while silica, zirconia and zircon, or their precursors, act as the inert matrix.

The suspensions were characterised as such (when possible) and in the presence of an anionic dispersant (Duramax D3021) or cationic dispersant (Amberlite LA-2). The colloidal silica suspension was characterised both as such, and after destabilization on an anionic exchange resin.

**Table 2 - ξ potential, pH and isoelectric point values of some of the coatings used**

| **Suspensions** | ξ **pot.** | **Natural pH** | **Isoelectric point** |
|---|---|---|---|
| Fe₂O₃ | +4.8 | 6.6 | - |
| Fe₂O₃ + Duramax | -95 | 6.6 | pH < 2 |
| Fe₂O₃ + Amberlite | +28 | 7.4 | - |
| SiO₂ Ludox as such | -105.0 | 9.9 | pH≤2 |
| SiO₂ Ludox destabilized | -1.4 | 2.5 | pH≤2 |
| ZrO₂ sol | +59 | 2.4 | - |
| Zr(OH)₄ | +7.3 | 7.1 | pH = 9 |
| Zr(OH)₄+SiO₂ Ludox (50 wt%.) | -59 | 6.4 | pH≤2 |
| Zircon | +2.7 | 5.5 | - |
| Zircon + SiO₂ Ludox (50 wt%.) | -37 | 4.6 | pH≤2 |
| Zircon + ZrO₂ sol (1 wt%.) | + 86 | 2.4 | - |

### Example 1 (for comparison)

Mechanical mixture of hematite + amorphous SiO₂.

### Reagents

0.87 g of amorphous SiO₂;
0.13g of Fe₂O₃.

### Preparation

0.87 grams of powdered SiO₂ were mixed within a container containing alumina grinding balls, with 0.13 g of Fe₂O₃ (average particle size <1µm), 14 g of water and 20 g of glaze. The suspension was mixed for a few minutes and applied onto a ceramic support for the measurements of technological properties, as also undertaken with all the atomized materials subsequently described.

### Example 2

Atomization of hematite + Duramax (1.4 wt%) + SiO₂ (Ludox PX-30).

### Reagents

167 g of SiO₂ (30% w/w; Ludox PX-30 with surface area = 250 m²/g);
10 g powdered Fe₂O₃;
0.14 g Duramax D3021 (40% w/w solution).

### Preparation

10 g of hematite were dispersed in 23 g of water in the presence of the dispersant Duramax D3021. The suspension was mixed for 1 hour by ball milling on mechanical rollers using alumina balls of about 2-5 mm in diameter (1/1 ratio between the milling bodies and the solid).

At the end of the treatment 167 g of SiO₂ were added (Ludox PX-30: the pH of this suspension was adjusted to 2 by adding HCl). The suspension obtained was further mixed for 16 hours (final pH 4.2).

At the end of the treatment, the material was atomized as previously described.

### Example 3

Atomization of hematite + Amberlite (5 wt%) + SiO₂ (PX-30).

### Reagents

167 g of SiO₂ (30% wt/wt; Ludox PX-30 with surface area = 250 m²/g);
10 g powdered Fe₂O₃;
0.5 g Amberlite LA-2.

### Preparation

10 g of hematite were dispersed in 23 g of water in the presence of 0.5 g of the dispersant Amberlite LA-2. The suspension was mixed for 1 hour by ball milling on mechanical rollers using alumina balls of about 2-5 mm in diameter (1/1 ratio between the milling bodies and the solid).

At the end of the treatment 167 g of SiO₂ were added (Ludox PX-30: the pH of this suspension was adjusted to 2 by adding HCl). The suspension obtained was further mixed for 16 hours (final pH 3.7).

At the end of the treatment, the material was atomized as previously described.

### Example 4

Atomization of hematite + Amberlite (5 wt%) + SiO₂ (PW-50).

### Reagents

100g of SiO₂ (50% wt/wt; Ludox PW-50 with surface area = 70 m²/g);
10 g powdered Fe₂O₃;
0.5 g Amberlite LA-2.

### Preparation

10 g of hematite were dispersed in 23 g of water in the presence of 0.5 g of the dispersant Amberlite LA-2. The suspension was mixed for 1 hour by ball milling on mechanical rollers using alumina balls of about 2-5 mm in diameter (1/1 ratio between the milling bodies and the solid).

At the end of the treatment 100g of SiO₂ (Ludox PW-50: the pH of this suspension was adjusted to 2 by adding HCl) + 68 g of H₂O were added and the suspension obtained was further ground as before for 16 hours (final pH 3.5).

At the end of the treatment, the material was atomized as previously described.

### Example 5

Atomization of hematite + Amberlite + SiO₂. Material calcinated at 950°C.

### Reagents

167g of SiO₂ (30% wt/wt; Ludox PX-30 with surface area = 250 m²/g);
10 g powdered Fe₂O₃;
1g Amberlite LA-2.

### Preparation

10 g of hematite were dispersed in 23 g of water in the presence of 1 g of the dispersant Amberlite LA-2. The suspension was mixed for 1 hour by ball milling on mechanical rollers using alumina balls of about 2-5 mm in diameter (1/1 ratio between the milling bodies and the solid).

At the end of the treatment 167 g of SiO₂ (Ludox PX-30: the pH of this suspension was adjusted to 2 by adding HCl) and the suspension obtained was further ground as before for 16 hours (final pH 3.7).

At the end of the treatment, the material was atomized as previously described. Calcination at T = 950°C was then undertaken.

### Example 6 (for comparison)

Mechanical mixture of zircon + hematite.

### Reagents

0.87 g of zircon;
0.13 g of powdered Fe₂O₃;

### Preparation

0.87 grams of powdered zircon were mixed within a container containing ZrO₂ milling bodies, with 0.13 g of powdered Fe₂O₃, 14 g of water and 20 g of glaze. The suspension was maintained under stirring for a few minutes and applied onto a ceramic support for the measurements of technological properties.

### Example 7

Atomization of [hematite + amberlite] [zircon + SiO₂ (30% wt/wt; Ludox PX-30)].

### Reagents

87 g of SiO₂ (30% wt/wt; Ludox PX-30);
25 g powdered zircon;
10g powdered Fe₂O₃;
0.1g Amberlite.

### Preparation

10 g of Fe₂O₃ were dispersed in 23 g of water in the presence of 0.1 g of the dispersant Amberlite; 25 g of zircon were mixed with 87 g of Ludox (whose pH was adjusted to 2). The two suspensions were mixed for 1 hour by ball milling on mechanical rollers using alumina balls of about 2-5 mm in diameter (1/1 ratio between the milling bodies and the solid). At the end of the treatment the hematite + Amberlite suspension was added to the suspension containing the inert matrices and the mixture was maintained for a further 16 hours under stirring.

### Example 8

Atomization of [hematite + Duramax] + [Zr sol (30% wt/wt) + SiO₂ (30% wt/wt; Ludox PX-30), molar ratio Zr/Si 1/1.4]. Calcination of the material at 1200°C.

### Reagents

142 g of SiO₂ (30% wt/wt; Ludox PX-30);
205.4 g of Zr sol;
18.32 g of powdered Fe₂O₃;
0.64 g of Duramax D3021.

### Preparation

18.32 g of Fe₂O₃ were dispersed in 43 g of water in the presence of 0.64 g of the dispersant Duramax D3021; 205.4 g of Zr sol were mixed with 142 g of Ludox (the pH was adjusted to 2 by adding HCl). The two suspensions were mixed for 1 hour by ball milling on mechanical rollers using alumina balls of about 2-5 mm in diameter (1/1 ratio between the milling bodies and the solid).

At the end of the treatment the hematite + Duramax suspension was added to the suspension containing the inert matrices and the mixture was maintained for a further 16 hours under stirring.

The material was then atomized as previously described.

The atomized product obtained was calcinated at T = 1200°C.

### Example 9

Atomization of [hematite + Amberlite] + [Zr sol + SiO₂ (30% wt/wt; Ludox PX-30)]. Calcination of the material at 1200°C.

### Reagents

142 g of SiO₂ (30% wt/wt; Ludox PX-30);
205.4 g of Zr sol;
18.32 g of powdered Fe₂O₃;
2 g of Amberlite.

### Preparation

18.32 g of hematite were dispersed in 43 g of water in the presence of the dispersant Amberlite; 205.4 g of Zr sol were mixed with 142 g of Ludox (the pH was adjusted to 2 by adding HCl). The suspensions were mixed for 1 hour by ball milling on mechanical rollers using alumina balls of about 2-5 mm in diameter (1/1 ratio between the milling bodies and the solid).

At the end of the treatment the hematite + Amberlite suspension was added to the suspension containing the inert matrices and the mixture was maintained for a further 16 hours under stirring.

At the end of the mixing, the material was atomized as previously described.

The atomized product obtained was calcinated at 1200°C.

### Example 10

Atomization of [Cadmium sulfoselenide + Duramax] + [Zr sol + SiO₂ Ludox]. Calcination of the material at 1200°C.

### Reagents

142 g of SiO₂ (30% wt/wt; Ludox PX-30);
205.4 g of Zr sol;
18.32 g of Cadmium sulfoselenide;
2 g of Duramax.

### Preparation

18.32 g of cadmium sulfoselenide were dispersed in 43 g of water in the presence of the dispersant Duramax; 205.4 g of Zr sol were mixed with 142 g of Ludox (the pH was adjusted to 2 by adding HCl). The suspensions were mixed for 1 hour by ball milling on mechanical rollers using alumina balls of about 2-5 mm in diameter (1/1 ratio between the milling bodies and the solid).

At the end of the treatment cadmium sulfoselenide + Duramax suspension was added to the suspension containing the inert matrices and the mixture was maintained for a further 16 hours under stirring.

The material was then atomized as previously described.

The atomized product obtained was calcinated at T = 1200°C.

### Physico-chemical and technological characterization

The results obtained show that adhesion between the inert matrix and heat-labile pigment is preserved within the spherical granulate obtained after atomization. An initial assessment of the efficiency of the heterocoagulation process can be gained from comparing the theoretical ratio of inclusion pigment/matrix with the experimental ratio gained from the ICP chemical analysis in the atomized samples. In particular, data relative to some of the examples given are shown in table 3. Respecting the pigment/matrix ratio reflects the improved adhesion between the two phases. A more complete assessment of the whole process was instead undertaken by comparing the colorimetric characterization data of manufactured articles obtained by firing a porcelain stoneware mix containing the inclusion pigment of interest (given in table 4).

**Table 3 - Chemical composition of the atomized powder**

| Example no. | Fe₂O₃/SiO₂ (wt/wt) |
|---|---|
| 2 | 1/98 |
| 3 | 1/6.5 |
| 4 | 1/6.5 |
| 5 | 1/6.5 |
| 6 | 1/5.3 |

**Table 4 - colorimetric performance of some examples of inclusion pigments in an inert matrix dispersed in a porcelain stoneware mix and fired at temperatures between 1180 and 1260°C (White = mix as such, without pigment)**

| T max of firing (°C) | Example | L* | a* | b* | T max of firing (°C) | Example | L* | a* | b* |
|---|---|---|---|---|---|---|---|---|---|
| 1180°C (A) | white | 85.6 | 3.1 | 10.6 | 1240°C (D) | white | 75.3 | 1.5 | 12.5 |
| | 5 | 60.6 | 12.5 | 7.4 | | 5 | 46.9 | 12.9 | 6.5 |
| | 1 | 70.6 | 7.5 | 8.8 | | 1 | 57.9 | 2.8 | 6.4 |
| | 4 | 62.4 | 10.4 | 7.0 | | 4 | 49.8 | 9.5 | 5.6 |
| | 3 | 66.2 | 10.2 | 6.7 | | 3 | 48.1 | 10.2 | 5.1 |
| 1200°C (B) | white | 82.5 | 2.4 | 11.3 | 1260°C (E) | white | 76.6 | 1.2 | 13.0 |
| | 5 | 52.3 | 13.8 | 7.3 | | 5 | 46.9 | 10.6 | 5.2 |
| | 1 | 62.0 | 5.8 | 7.9 | | 1 | 60.3 | 2.1 | 6.9 |
| | 4 | 54.3 | 10.7 | 6.5 | | 4 | 50.1 | 9.5 | 5.6 |
| | 3 | 55.0 | 11.7 | 6.4 | | 3 | 48.3 | 9.9 | 5.0 |
| 1220°C (C) | white | 77.5 | 2.0 | 12.7 | | | | | |
| | 5 | 47.6 | 13.5 | 7.1 | | | | | |
| | 1 | 59.3 | 4.2 | 6.8 | | | | | |
| | 4 | 50.1 | 10.3 | 6.1 | | | | | |
| | 3 | 49.7 | 11.2 | 5.7 | | | | | |

## Claims

1. Process for preparing heat-labile ceramic pigments included in an inert matrix comprising a heterocoaugulation step and an atomisation step.

2. Process as claimed in claim 1, wherein:
- if necessary, the heat-labile pigment and the inert matrix are ground in the form of fine powders;
- a stable aqueous suspension of the heat-labile pigment is prepared;
- a stable aqueous suspension of the inert matrix or its precursors is prepared;
- the aforesaid two suspensions are mixed so as to achieve heterocoagulation;
- the mixture obtained by the preceding step is dried by lyophilisation or atomization..

3. Process as claimed in claim 2, wherein said suspensions are functionalised with opposing charges by using anionic and/or cationic dispersants (to be removed - one by means of an anionic dispersant and the other by means of a cationic dispersant) so as to allow heterocoagulation when the mixtures are mixed.

4. Process as claimed in claims 1-3, wherein the quantity of water used for each suspension is such that the total solid content is 30 or 40 wt%; and the weight ratio of inert matrix to heat-labile pigment is between 1:5 and 1:20.

5. Process as claimed in claim 4, wherein the pH of the mixture obtained by mixing the two suspensions is within the range 3 to 5.

6. Process as claimed in claims 1-5, wherein the mixture obtained by mixing the two suspensions is atomized, and the powders thus obtained are dried and possibly calcinated.

## Patentansprüche

1. Verfahren zur Herstellung Hitze-labiler keramischer Pigmente, die in eine inerte Matrix eingeschlossen sind, umfassend einen Heterokoagulations-Schritt und einen Atomisierungs-Schritt.

2. Verfahren wie in Patentanspruch 1 beansprucht, worin - sofern erforderlich, das Hitze-labile Pigment und die inerte Matrix in Form feiner Pulver gemahlen werden;
- eine stabile, wässrige Suspension des Hitze-labilen Pigments hergestellt wird;
- eine stabile, wässrige Suspension der inerten Matrix oder ihrer Vorstufen hergestellt wird;
- die vorgenannten beiden Suspensionen so gemischt werden, dass man eine Heterokoagulation erreicht;
- die durch den vorangehenden Schritt erhaltene Mischung durch Lyophilisieren oder Atomisieren getrocknet wird.

3. Verfahren wie in Patenanspruch 2 beansprucht, worin die Suspensionen mit gegensätzlichen Ladungen funktionalisiert werden durch Verwendung anionischer und/oder kationischer Dispergiermittel (die entfernt werden sollen - eine mittels eines anionischen Dispergiermittels und die andere mittels eines kationischen Dispergiermittels), sodass eine Heterokoagulation ermöglicht wird, wenn die Mischungen gemischt werden.

4. Verfahren wie in den Patentansprüchen 1 bis 3 beansprucht, worin die Menge an Wasser, die für jede Suspension verwendet wird, derart ist, dass der Gesamt-Feststoff-Gehalt 30 oder 40 Gew.-% ist und das Gewichtsverhältnis inerte Matrix zu Hitze-labilem Pigment zwischen 1:5 und 1:20 liegt.

5. Verfahren wie in Patentanspruch 4 beansprucht, worin der pH-Wert der durch Mischen der beiden Suspensionen erhaltenen Mischung innerhalb des Bereichs von 3 bis 5 liegt.

6. Verfahren wie in den Patentansprüchen 1 bis 5 beansprucht, worin die durch Mischen der beiden Suspensionen erhaltene Mischung atomisiert wird und die so erhaltenen Pulver getrocknet und möglicherweise calciniert werden.

## Revendications

1. Procédé pour préparer des pigments céramiques thermolabiles inclus dans une matrice inerte, comportant une étape d'hétérocoagulation et une étape d'atomisation.

2. Procédé selon la revendication 1, dans lequel :
- si nécessaire, le pigment thermolabile et la matrice inerte sont broyés sous forme de poudres fines,
- une suspension aqueuse stable du pigment thermolabile est préparée,
- une suspension aqueuse stable de la matrice inerte ou de ses précurseurs est préparée,
- les deux suspensions susmentionnées sont mélangées de manière à obtenir une hétérocoagulation,
- le mélange obtenu par l'étape précédente est séché par lyophilisation ou atomisation.

3. Procédé selon la revendication 2, dans lequel lesdites suspensions sont fonctionnalisées par des charges opposées en utilisant des dispersants anioniques et/ou cationiques (à éliminer - l'une au moyen d'un dispersant anionique et l'autre au moyen d'un dispersant cationique) de manière à permettre une hétérocoagulation lorsque les mélanges sont mélangés.

4. Procédé selon les revendications 1 à 3, dans lequel la quantité d'eau utilisée pour chaque suspension est telle que la teneur totale en matière solide est de 30 ou 40 % en poids, et le rapport pondéral entre la matrice inerte et le pigment thermolabile est entre 1:5 et 1:20.

5. Procédé selon la revendication 4, dans lequel le pH du mélange obtenu en mélangeant les deux suspensions est dans la plage de 3 à 5.

6. Procédé selon les revendications 1 à 5, dans lequel le mélange obtenu en mélangeant les deux suspensions est atomisé, et les poudres ainsi obtenues sont séchées et éventuellement calcinées.
